# EUROPEAN PATENT SPECIFICATION

(11) **EP 3 066 836 B1**
(45) Date of publication and mention of the grant of the patent: **01.09.2021**
(21) Application number: 14799308.3
(22) Date of filing: 04.11.2014
(51) Int. Cl.: H04N 21/2343, H04N 21/2747, H04N 21/4147, H04N 21/44, H04N 21/4402

(54) **DRAWING OPERATION REPLAY IN MEMORY**
ZEICHENOPERATIONSWIEDERGABE IN EINEM SPEICHER
LECTURE D'OPÉRATION DE DESSIN EN MÉMOIRE

(30) Priority: 05.11.2013 US 201361900016 P
(43) Date of publication of application: 14.09.2016
(73) Proprietor: UTC Fire & Security Americas Corporation, Inc., Bradenton, FL 34202 (US)
(72) Inventor: KANISETTY, Vamshikrishna, Madhapur Hyderabad 500 081 (IN)
(74) Representative: Schmitt-Nilson Schraud Waibel Wohlfrom Patentanwälte Partnerschaft mbB
(86) International application number: PCT/US2014/063838
(87) International publication number: WO 2015/069630

(56) References cited:
- WO-A1-02/14999
- WO-A2-2010/041267
- US-A1- 2008 152 319
- US-A1- 2011 126 110
- US-A1- 2012 030 706
- US-A1- 2012 229 588
- US-A1- 2012 236 007
- US-A1- 2013 084 053
- US-A1- 2013 100 242
- US-B2- 8 417 090

## Description

### BACKGROUND

The subject matter disclosed herein relates to video display systems, and in particular, to drawing operation replay in memory for video format conversion.

Legacy digital video recorders (DVRs) use custom software development kits (SDKs) or ActiveX controls to connect to and render the images on a display. These interfaces may not support standard video encoding or transport protocols and instead use a black box approach for connecting to DVRs and rendering the images. In order to support video on devices that support standard video formats and protocols, such as handheld devices, the video needs to be converted to a standard format. A video format provides an organized representation of video data. Video formats can be proprietary or standard, such as MPEG2/H262. Proprietary formats can only be decoded by vendor-specific tools as details of proprietary formats are not publicly available.

U.S. Pat. No. 8,417,090 to Fleming describes transmitting and receiving surveillance video and/or alarm data and converting proprietary video formats into a single, standardized format. In Fleming, a remote viewer connects to a central server; the server then downloads live images from DVR units; and the images are converted to a standard format and then presented back to the viewer as standard images or as a standardized video stream. Fleming converts and processes the video within the DVRs rather than converting and processing the video at the central server. While Fleming shifts the format conversion burden from the remote viewers, Fleming requires modifications to the DVRs.

### BRIEF SUMMARY

The invention is defined by a method for drawing command replay in memory for video format conversion by a video server according to claim 1 and corresponding video server according to claim 5. Further details are defined by dependent claims 2-4 and 6-11.

### BRIEF DESCRIPTION OF THE DRAWINGS

The present disclosure is illustrated by way of example and not limited in the accompanying figures in which like reference minerals indicate similar elements.
FIG. 1 is a schematic block diagram illustrating a system in accordance with one or more embodiments;
FIG. 2 illustrates a dataflow diagram in accordance with one or more embodiments; and
FIG. 3 illustrates a process in accordance with one or more embodiments.

### DETAILED DESCRIPTION

It is noted that various connections are set forth between elements in the following description and in the drawings (the contents of which are included in this disclosure by way of reference). It is noted that these connections in general and, unless specified otherwise, may be direct or indirect and that this specification is not intended to be limiting in this respect. In this respect, a coupling between entities may refer to either a direct or an indirect connection.

Exemplary embodiments of apparatuses, systems, and methods are described for drawing operation replay in memory for video format conversion. Embodiments capture moving images that are intended to be rendered on a target drawing surface, such as a display, by intercepting drawing commands associated with an operating system graphics call made by an application and replaying the same commands in memory on a virtual device context. Video rendered to memory is captured and converted into a standard format that can be streamed using protocols such as hypertext transfer protocol (HTTP) streaming or real-time transport protocol (RTP) streaming. Video streaming protocols enable distribution of video over a network.

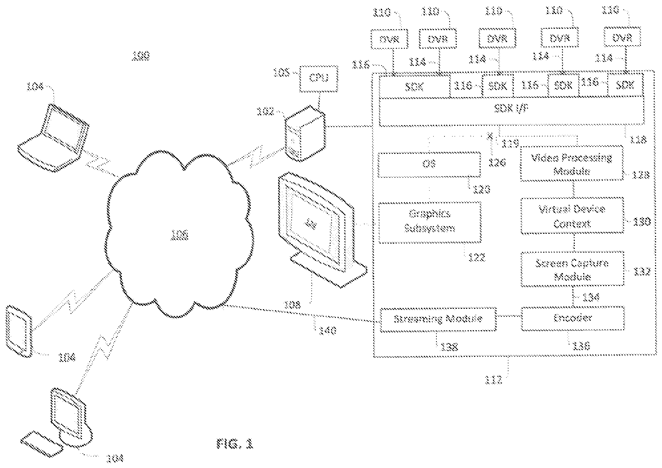

Referring to FIG. 1, an exemplary system 100 is shown. The system 100 is shown as including a video server 102 configured to stream video to one or more video clients 104 via a network 106. The video server 102 is a high-speed processing device (e.g., a mainframe computer, workstation, personal computer, embedded computing device, or the like) including processing circuitry 105 (e.g., a computer processor/CPU) capable of heading and executing instructions, and handling interactions with various components of the system 100. The video clients 104 may be embodied in any type of computing or video display devices known in the art, such as a laptop, tablet computer, mobile device, personal computer, workstation, server, and the like. The network 106 may be any type of communications network known in the art and can include a combination of wireless, wired, and/or fiber optic links.

The video server 102 interfaces to at least one display 108 and a plurality of digital video recorders (DVRs) 110. The DVRs 110 may be provided by a number of different vendors using different proprietary formats for video streams 114. Memory 112 of the video server 102 can hold a number of programs and data to support video streaming. A number of third-party software development kits (SDKs) 116 may be stored in memory 112 as applications and executed by the processing circuitry 105 to interface with the DVRs 110 using vendor-specific proprietary formats. Fetching and decoding of the video streams 114 by the third-party SDKs 116 may be managed through an SDK interface 118. The SDK interface 118 can interact with an operating system 120 to make operating system graphics calls 119 to pass drawing commands for rendering decoded video as images from the video streams 114 through a graphics subsystem 122 to a display window 124 on the display 108.

Embodiments intercept operating system graphics calls 119 from the video streams 114 at intercept point 126 and pass the operating system graphics calls 119 to a video processing module 128. A virtual device context 130 is set as a target of drawing commands associated with the operating system graphics calls 119. The virtual device context 130, which may also be referred to as a frame buffer, is an area in memory 112 where drawings (for example, images) are made in accordance with an embodiment. Drawing that are made in the virtual device context 130 exist only in memory 112 and are not visible to a user. The drawing commands are replayed on the virtual device context 130 in memory 112 of the video server 102. A screen capture operation is performed by a screen capture module 132 of the virtual device context 130 after the replaying of the drawing commands on the virtual device context 130. An output 134 of the screen capture operation from the screen capture module 132 is encoded by encoder 136, passed to a streaming module 138, and output into a video streaming protocol 140. Video in the video streaming protocol 140 can be sent over the network 106 to one or more of the video clients 104 using an industry standard protocol.

In embodiments, the DVRs 110 provide non-standard video streams 114 in proprietary formats that may not be directly converted to standard video formats to support rendering videos by the various video clients 104. Transcoding is a technique that can be used to convert one video format to another, but this is only possible if the video format provided by the DVRs 110 is a known, e.g., a published format. Raw video data from the DVRs 110 may be encrypted such that direct processing of the raw video data is not possible. In cases where the video format is not known outside of the third-party SDKs 116, the video streams 114 cannot be directly converted into a standard format by the video processing module 128. Rather than attempting to convert the video format of the video streams 114, the video processing module 128 intercepts and redirects low-level drawing commands associated with operating system graphics calls 119 intended for the operating system 120 and renders the video in the virtual device context 130 in memory 112. Application programming interface (API) hooking can be used, for example, at the intercept point 126 to redirect operating system graphics calls 119 from the video streams 114 to the video processing module 128.

On-screen video capture is a technique where drawing operations on a specific window or entire desktop can be captured and stored, such as operations targeting the display window 124. However on-screen video capture has limitations where the display window 124 needs to be visible on the display 108 and all drawing operations are shown. This consumes display resources and becomes unmanageable when supporting multiple DVRs 110 in parallel. Additionally, any overlapping windows can hinder the drawing operations, particularly if multiple screen captures are performed in parallel. Exemplary embodiments use the virtual device context 130 to store drawing operations for the screen capture module 132, where replaying of the drawing commands on the virtual device context 130 and the screen capture operation of the virtual device context 130 are performed absent output of the drawing commands and resulting images to the display 108. In other words, the screen capture module 132 performs screen capture operations in the memory 112, and there is no output to the display 108. Replaying of drawing instructions creates a virtual copy of the video output in the memory 112 rather than directing the video output to the display 108. Replaying retains the state of images in the virtual device context 130, where the screen capture module 132 can operate as if the images are being captured from the display 108 but without the risk of window overlap or actual rendering delays. Had the hooking/interception not been performed, video output would have been rendered to the display 108. Instead, drawing operations associated with rendering video output are diverted into the virtual device context 130 in memory 112, where transcoding from a drawn image in memory 112 into a standard format is performed.

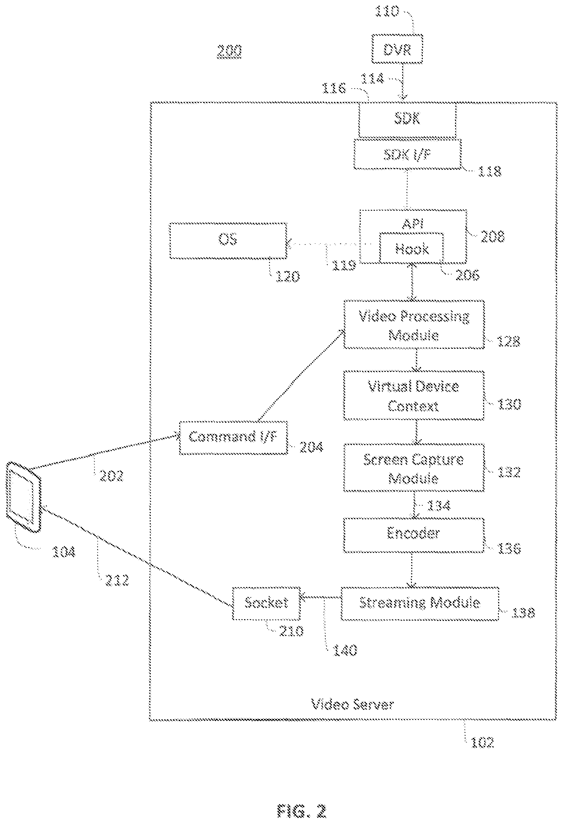

FIG. 2 illustrates a dataflow diagram 200 in accordance with one or mote embodiments. One of the video clients 104 can make a request 202 to view video from one of the DVRs 110. The request 202 may be processed by a command interface 204 of the video server 102, which can access the video processing module 128. The video processing module 128 can enable or configure hooking code 206 in an API 208. The API 208 may be configured to pass operating system graphics calls 119 to operating system 120. The video processing module 128 is configured to intercept the operating system graphics calls 119 from video streams 114 fetched by a plurality of third-party SDKs 116 via SDK interface 118 and hooking code 206. The hooking code 206 refers to any redirection technique to capture lower level drawing commands that are otherwise intended for the operating system 120. In exemplary embodiments, the third-party SDKs 116 do not convert video into a format that is directly usable by the streaming module 138, nor do the third-party SDKs 116 decode the video streams 114. The third-party SDKs 116 accept credentials for DVRs 110 and attempt to render video directly on the display 108. Rather than allow video from the third-party SDKs 116 to reach the display 108, the operating system graphics calls 119 made by the third-party SDKs 116 are intercepted and redirected to the virtual context 130.

The video processing module 128 can direct the operating system graphics calls 119 with associated drawing commands to the virtual device context 130. The virtual device context 130 is configured to receive replayed drawing commands associated with the intercepted operating system graphics calls 119. The screen capture module 132 is configured to perform a screen capture operation of the virtual device context 130 based on the replaying of the drawing commands on the virtual device context 130. Replay of the drawing commands on the virtual device context 130 and the screen capture operation are performed absent output of the drawing commands to the display 108 of FIG. 1. The encoder 136 encodes output 134 of the screen capture module 132 into a standardized encoding format for the streaming module 138 to send encoded output using a video streaming protocol 140. A socket 210 supporting streaming is established with the video client 104 for the video client 104 to receive streaming video 212 in an industry standard format. Accordingly, the video client 104 can avoid installing vendor specific software to handle encoding/decoding details for a plurality of DVRs 110 using various vendor-specific formats for the video streams 114.

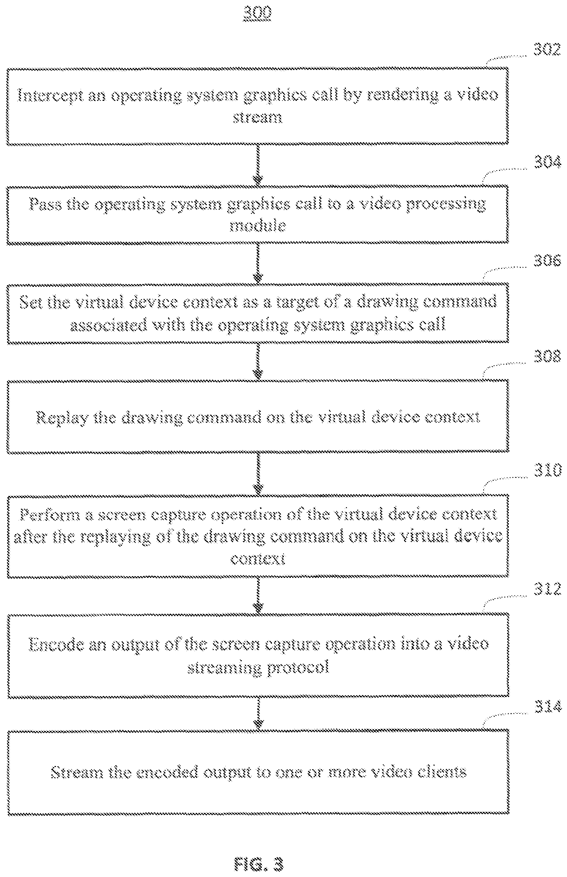

FIG. 3 illustrates a process 300 in accordance with one or more embodiments. The process 300 is described in reference to FIGS. 1-3 and need not be performed in the precise order as depicted in FIG. 3. At block 302, an operating system graphics call 119 for a video stream 114 is intercepted on a video server 102. Interception of the operating system graphics call 119 may be performed using application programming interface hooking, e.g., hooking code 206, by the video server 102. The video stream 114 may be fetched and decoded by a third-party SDK 116 where the video stream 114 is in a proprietary or unknown format. The operating system graphics call 119 rendered by the third-party SDK 116 is re-rendered in memory 112 without displaying images on the display 108.

At block 304, the operating system graphics call 119 is passed to a video processing module 128. The video processing module 128 may be linked to a plurality of third-party SDKs 116. The video processing module 128 is configured to intercept operating system graphics calls 119 from the third-party SDKs 116. The third-party SDKs 116 may be associated with DVRs 110 having different video formats.

At block 306, a virtual device context 130 is set as a target of a drawing command associated with the operating system graphics call 119. At block 308, the drawing command is replayed on the virtual device context 130 in memory 112 of the video server 102. At block 310, a screen capture operation of the virtual device context 130 is performed after the replaying of the drawing command on the virtual device context 130. At block 312, an output 134 of the screen capture operation is encoded into a video streaming protocol 140. The replaying of the drawing command on the virtual device context 130 and the screen capture operation of the virtual device context 130 are performed absent output of the drawing command to a display 108. At block 314, the encoded output is streamed to one or more video clients 104 as streaming video 212. The video streaming protocol 140 may be an industry standard protocol, such as HTTP or RTP streaming.

Embodiments of the disclosure may be tied to one or more particular machines. For example, one or more devices, apparatuses, systems, or architectures may be configured to perform drawing operation replay in memory for video format conversion. Technical effects include converting proprietary or unknown video formats to an industry standard streaming protocol. The captured video from using this technique can be encoded to standard formats to support streaming to industry standard based video players or devices. Embodiments enable maintenance and updates to SDKs provided by various vendors to be deployed to a video server, thus reducing the need to maintain the updates on multiple video clients.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer-readable media, such as a transitory and/or non-transitory computer-readable medium. The instructions, when executed, may cause an entity (e.g., an apparatus or system) to perform one or more methodological acts as described herein.

Aspects of the disclosure have been described in terms of illustrative embodiments thereof. Numerous other embodiments, modifications and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional. The scope of protection is defined by the claims.

## Claims

1. A method for drawing command replay in memory (112) for video format conversion by a video server (102), comprising:
intercepting (302) an operating system graphics call (119) from a video stream (114);
passing (304) the operating system graphics call (119) to a video processing module (128);
setting (306) a frame buffer in the memory (112) as a target of a drawing command associated with the operating system graphics call (119);
replaying (308) the drawing command to create a virtual copy of the video stream (114) by retaining a state of images in the frame buffer;
performing (310) a screen capture operation after the replaying of the drawing command in the frame buffer; and
encoding (312) an output (134) of the screen capture operation into a video streaming protocol (140).

2. The method of claim 1, wherein
the step of intercepting further comprises redirecting low-level drawing commands associated with the operating system graphics call (119) intended for the operating system (120), and
the step of encoding the output (134) of the screen capture operation further comprises passing the encoded output (134) of the screen capture operation to a streaming module (138) and outputting it into the video streaming protocol (140).

3. The method of claim 1, wherein the video stream (114) is in a proprietary format, and the video streaming protocol (140) is an industry standard protocol, or wherein the video stream (114) is fetched and decoded by a third-party software development kit (116).

4. The method of claim 1, further comprising:
linking the video processing module (128) to a plurality of third-party software development kits (116), the video processing module (128) configured to intercept operating system graphics calls (119) from the third-party software development kits (116), wherein the third-party software development kits (116) are associated with digital video recorders having different video formats, wherein the replaying of the drawing command in the frame buffer and the screen capture operation are performed absent output of the drawing command to a display (108), wherein the intercepting is performed using application programming interface hooking, or wherein the method further comprises streaming the encoded output (134) to one or more video clients.

5. A video server (102) for drawing command replay in memory (112) for video format conversion, comprising:
memory (112) comprising a frame buffer; and
processing circuitry configured to:
intercept an operating system graphics call (119) from a video stream (114);
pass the operating system graphics call (119) to a video processing module (128);
set the frame buffer as a target of a drawing command associated with the operating system graphics call (119);
replay the drawing command to create a virtual copy of the video stream (114) by retaining a state of images of the video stream (114) in the frame buffer;
perform a screen capture operation after replaying of the drawing command in the frame buffer; and
encode an output (134) of the screen capture operation into a video streaming protocol (140).

6. The video server (102) of claim 5, wherein the processing circuitry further is configured to
redirect low-level drawing commands associated with the operating system graphics call (119) intended for the operating system (120), and
pass the encoded output (134) of the screen capture operation to a streaming module (138) and to output it into the video streaming protocol (140).

7. The video server (102) of claim 5, wherein the video stream (114) is in a proprietary format, and the video streaming protocol (140) is an industry standard protocol, or wherein the video stream (114) is fetched and decoded by a third-party software development kit (116).

8. The video server (102) of claim 7, wherein the video processing module (128) is linked to a plurality of third-party software development kits (116), and the video processing module (128) is configured to intercept operating system graphics calls (119) from the third-party software development kits (116), or wherein the third-party software development kits (116) are associated with digital video recorders having different video formats.

9. The video server (102) of claim 5, wherein the replay of the drawing command in the frame buffer and the screen capture operation are performed absent output of the drawing command to a display (108).

10. The video server (102) of claim 5, wherein interception of the operating system graphics call (119) is performed using application programming interface hooking.

11. The video server (102) of claim 5, wherein the processing circuitry is further configured to stream the encoded output (134) to one or more video clients.

## Patentansprüche

1. Verfahren zur Zeichenbefehlwiedergabe im Speicher (112) zur Videoformatkonvertierung durch einen Video-Server (102), umfassend:
Abfangen (302) eines Betriebssystemgrafikaufrufs (119) von einem Video-Stream (114);
Weiterleiten (304) des Betriebssystemgrafikaufrufs (119) an ein Videoverarbeitungsmodul (128);
Einstellen (306) eines Frame-Puffers in dem Speicher (112) als ein Ziel eines Zeichenbefehls in Verbindung mit dem Betriebssystemgrafikaufruf (119);
Wiedergeben (308) des Zeichenbefehls, um eine virtuelle Kopie des Video-Streams (114) durch Bewahren eines Zustands von Bildern in dem Frame-Puffer zu erzeugen;
Durchführen (310) eines Bildschirmerfassungsvorgangs nach dem Wiedergeben des Zeichenbefehls in dem Frame-Puffer; und
Kodieren (312) einer Ausgabe (134) des Bildschirmerfassungsvorgangs in ein Video-Streaming-Protokoll (140) .

2. Verfahren nach Anspruch 1, wobei
der Schritt des Abfangens ferner das Umleiten von Zeichenbefehlen niedriger Stufe in Verbindung mit dem Betriebssystemgrafikaufruf (119), der für das Betriebssystem (120) bestimmt ist, umfasst, und
der Schritt des Kodierens der Ausgabe (134) des Bildschirmerfassungsvorgangs ferner das Weiterleiten der kodierten Ausgabe (134) des Bildschirmerfassungsvorgangs an ein Streaming-Modul (138) und das Ausgeben derselben in dem Video-Streaming-Protokoll (140) umfasst.

3. Verfahren nach Anspruch 1, wobei der Video-Stream (114) in einem proprietären Format vorliegt und das Video-Streaming-Protokoll (140) ein Industriestandardprotokoll ist, oder wobei der Video-Stream (114) von einem Fremd-Softwareentwicklungssystem (116) abgerufen und dekodiert wird.

4. Verfahren nach Anspruch 1, ferner Folgendes umfassend:
Verbinden des Videoverarbeitungsmoduls (128) mit einer Vielzahl von Fremd-Softwareentwicklungssystemen (116), wobei das Videoverarbeitungsmodul (128) so konfiguriert ist, dass es Betriebssystemgrafikaufrufe (119) von den Fremd-Softwareentwicklungssystemen (116) abfängt, wobei die Fremd-Softwareentwicklungssysteme (116) mit digitalen Videorecordern verbunden sind, die verschiedene Videoformate aufweisen, wobei das Wiedergeben des Zeichenbefehls in dem Frame-Puffer und der Bildschirmerfassungsvorgang ohne Ausgabe des Zeichenbefehls an eine Anzeige (108) durchgeführt werden, wobei das Abfangen unter Verwendung von Anwendungsprogrammierschnittstellen-Hooking durchgeführt wird, oder wobei das Verfahren ferner das Streamen der kodierten Ausgabe (134) an einen oder mehrere Video-Clients umfasst.

5. Video-Server (102) zur Zeichenbefehlwiedergabe im Speicher (112) zur Videoformatkonvertierung, umfassend:
einen Speicher (112), der einen Frame-Puffer umfasst; und
eine Verarbeitungsschaltung, die so konfiguriert ist, dass sie:
einen Betriebssystemgrafikaufruf (119) von einem Video-Stream (114) abfängt;
den Betriebssystemgrafikaufruf (119) an ein Videoverarbeitungsmodul (128) weiterleitet;
den Frame-Puffer als ein Ziel eines Zeichenbefehls in Verbindung mit dem Betriebssystemgrafikaufruf (119) einstellt;
den Zeichenbefehl wiedergibt, um eine virtuelle Kopie des Video-Streams (114) durch Bewahren eines Zustands von Bildern des Video-Streams (114) in dem Frame-Puffer zu erzeugen;
einen Bildschirmerfassungsvorgang nach dem Wiedergeben des Zeichenbefehls in dem Frame-Puffer durchführt; und
eine Ausgabe (134) des Bildschirmerfassungsvorgangs in ein Video-Streaming-Protokoll (140) kodiert.

6. Video-Server (102) nach Anspruch 5, wobei die Verarbeitungsschaltung ferner so konfiguriert ist, dass sie
Zeichenbefehle niedriger Stufe in Verbindung mit dem Betriebssystemgrafikaufruf (119), der für das Betriebssystem (120) bestimmt ist, weiterleitet, und
die kodierte Ausgabe (134) des Bildschirmerfassungsvorgangs an ein Streaming-Modul (138) weiterleitet und sie in dem Video-Streaming-Protokoll (140) ausgibt.

7. Video-Server (102) nach Anspruch 5, wobei der Video-Stream (114) in einem proprietären Format vorliegt und das Video-Streaming-Protokoll (140) ein Industriestandardprotokoll ist, oder wobei der Video-Stream (114) von einem Fremd-Softwareentwicklungssystem (116) abgerufen und dekodiert wird.

8. Video-Server (102) nach Anspruch 7, wobei das Videoverarbeitungsmodul (128) mit einer Vielzahl von Fremd-Softwareentwicklungssystemen (116) verbunden ist, und wobei das Videoverarbeitungsmodul (128) so konfiguriert ist, dass es Betriebssystemgrafikaufrufe (119) von den Fremd-Softwareentwicklungssystemen (116) abfängt, oder wobei die Fremd-Softwareentwicklungssysteme (116) mit digitalen Videorecordern verbunden sind, die verschiedene Videoformate aufweisen.

9. Video-Server (102) nach Anspruch 5, wobei die Wiedergabe des Zeichenbefehls in dem Frame-Puffer und der Bildschirmerfassungsvorgang ohne Ausgabe des Zeichenbefehls an eine Anzeige (108) durchgeführt werden.

10. Video-Server (102) nach Anspruch 5, wobei das Abfangen des Betriebssystemgrafikaufrufs (119) unter Verwendung von Anwendungsprogrammierschnittstellen-Hooking durchgeführt wird.

11. Video-Server (102) nach Anspruch 5, wobei die Verarbeitungsschaltung ferner so konfiguriert ist, dass sie die kodierte Ausgabe (134) an einen oder mehrere Video-Clients streamt.

## Revendications

1. Procédé de lecture de commande de dessin en mémoire (112) pour une conversion de format vidéo par un serveur vidéo (102), comprenant :
l'interception (302) d'un appel graphique de système d'exploitation (119) à partir d'un flux vidéo (114) ;
la transmission (304) de l'appel graphique de système d'exploitation (119) à un module de traitement vidéo (128) ;
la définition (306) d'un tampon de trame dans la mémoire (112) en tant que cible d'une commande de dessin associée à l'appel graphique de système d'exploitation (119) ;
la lecture (308) de la commande de dessin pour créer une copie virtuelle du flux vidéo (114) en conservant un état d'images dans le tampon de trame ;
la réalisation (310) d'une opération de capture d'écran après la lecture de la commande de dessin dans le tampon de trame ; et
le codage (312) d'une sortie (134) de l'opération de capture d'écran dans un protocole de diffusion vidéo en flux continu (140).

2. Procédé selon la revendication 1, dans lequel
l'étape d'interception comprend en outre la redirection de commandes de dessin de bas niveau associées à l'appel graphique de système d'exploitation (119) destiné au système d'exploitation (120), et
l'étape de codage de la sortie (134) de l'opération de capture d'écran comprend en outre la transmission de la sortie codée (134) de l'opération de capture d'écran à un module de diffusion en flux continu (138) et la délivrance de celle-ci en sortie dans le protocole de diffusion vidéo en flux continu (140).

3. Procédé selon la revendication 1, dans lequel le flux vidéo (114) est dans un format propriétaire, et le protocole de diffusion vidéo en flux continu (140) est un protocole standard de l'industrie, ou dans lequel le flux vidéo (114) est extrait et décodé par un kit de développement logiciel tiers (116).

4. Procédé selon la revendication 1, comprenant en outre :
la liaison du module de traitement vidéo (128) à une pluralité de kits de développement logiciel tiers (116), le module de traitement vidéo (128) étant configuré pour intercepter les appels graphiques de système d'exploitation (119) à partir des kits de développement logiciel tiers (116), dans lequel les kits de développement de logiciels tiers (116) sont associés à des enregistreurs vidéo numériques ayant différents formats vidéo, dans lequel la lecture de la commande de dessin dans le tampon de trame et l'opération de capture d'écran sont réalisées en l'absence de sortie de la commande de dessin vers un affichage (108), dans lequel l'interception est réalisée en utilisant l'accrochage d'interface de programmation d'application, ou dans lequel le procédé comprend en outre la diffusion en flux continu de la sortie codée (134) vers un ou plusieurs clients vidéo.

5. Serveur vidéo (102) pour la lecture de commande de dessin en mémoire (112) pour une conversion de format vidéo, comprenant :
une mémoire (112) comprenant un tampon de trame ; et
un circuit de traitement configuré pour :
intercepter un appel graphique de système d'exploitation (119) à partir d'un flux vidéo (114) ;
transmettre l'appel graphique de système d'exploitation (119) à un module de traitement vidéo (128) ;
définir le tampon de trame comme cible d'une commande de dessin associée à l'appel graphique de système d'exploitation (119) ;
lire la commande de dessin pour créer une copie virtuelle du flux vidéo (114) en conservant un état d'images du flux vidéo (114) dans le tampon de trame ;
réaliser une opération de capture d'écran après la lecture de la commande de dessin dans le tampon de trame ; et
coder une sortie (134) de l'opération de capture d'écran dans un protocole de diffusion vidéo en flux continu (140).

6. Serveur vidéo (102) selon la revendication 5, dans lequel le circuit de traitement est en outre configuré pour
rediriger des commandes de dessin de bas niveau associées à l'appel graphique de système d'exploitation (119) destiné au système d'exploitation (120), et
transmettre la sortie codée (134) de l'opération de capture d'écran à un module de diffusion en flux continu (138) et délivrer celle-ci en sortie dans le protocole de diffusion vidéo en flux continu (140).

7. Serveur vidéo (102) selon la revendication 5, dans lequel le flux vidéo (114) est dans un format propriétaire, et le protocole de diffusion vidéo en flux continu (140) est un protocole standard de l'industrie, ou dans lequel le flux vidéo (114) est extrait et décodé par un kit de développement logiciel tiers (116).

8. Serveur vidéo (102) selon la revendication 7, dans lequel le module de traitement vidéo (128) est lié à une pluralité de kits de développement logiciel tiers (116), et le module de traitement vidéo (128) est configuré pour intercepter les appels graphiques de système d'exploitation (119) à partir des kits de développement logiciels tiers (116), ou dans lequel les kits de développement logiciel tiers (116) sont associés à des enregistreurs vidéo numériques ayant différents formats vidéo.

9. Serveur vidéo (102) selon la revendication 5, dans lequel la lecture de la commande de dessin dans le tampon de trame et l'opération de capture d'écran sont réalisées en l'absence de sortie de la commande de dessin vers un affichage (108).

10. Serveur vidéo (102) selon la revendication 5, dans lequel l'interception de l'appel graphique de système d'exploitation (119) est réalisée en utilisant l'accrochage d'interface de programmation d'application.

11. Serveur vidéo (102) selon la revendication 5, dans lequel le circuit de traitement est en outre configuré pour diffuser en continu la sortie codée (134) vers un ou plusieurs clients vidéo.
